Europäisches Patentamt

(19) European Patent Office

Office européen des brevets

(11) Numéro de publication: **0 231 217**
**B1**

(12) **FASCICULE DE BREVET EUROPEEN**

(45) Date de publication du fascicule du brevet:
06.09.89

(21) Numéro de dépôt: **86904065.9**

(22) Date de dépôt: **22.07.86**

(86) Numéro de dépôt international:
**PCT/CH 86/00103**

(87) Numéro de publication internationale:
**WO 87/00513 (29.01.87** Gazette 87/3)

(51) Int. Cl.⁴: **B 65 D 83/14,** G 05 D 7/01

(54) **REGULATEUR DE POUSSEE COMPRENANT UNE ENCEINTE DE MONTAGE.**

(30) Priorité: **23.07.85 CH 3286/85**
**15.11.85 CH 4895/85**

(43) Date de publication de la demande:
**12.08.87 Bulletin 87/33**

(45) Mention de la délivrance du brevet:
**06.09.89 Bulletin 89/36**

(84) Etats contractants désignés:
**AT BE CH DE FR GB IT LI LU NL SE**

(56) Documents cités:
**WO-A-82/02932**
**DE-A-1 933 401**
**FR-A-1 217 791**
**GB-A-783 323**

(73) Titulaire: **Werding, Winfried Jean, 77, avenue du Général Guisan, CH-1009 Pully (CH)**

(72) Inventeur: **Werding, Winfried Jean, 77, avenue du Général Guisan, CH-1009 Pully (CH)**

(74) Mandataire: **Gasser, François W., Postfach 1555, CH-3001 Bern (CH)**

ACTORUM AG

## Description

La pésente invention a trait à un régulateur de poussée comprenant une enceinte de montage et déstiné à maintenir, au moins approximativement, constant le débit par unité de temps de produits liquides ou crémeux expulsés d'un container aérosol à l'aide d'un gaz comprimé, suivant l'introduction des revendications 1 et 8.

Il est connu que les gaz comprimés, tel que par exemple l'air ou l'azote, présentent une chute de pression dès que le volume du container dans lequel ils sont logés s'agrandit, tel qu'il est le cas dans un container aérosol duquel on expulse un produit. Le débit par unité de temps de ce produit diminue proportionellement à cette chute de pression. En même temps, lorsque le produit est pulvérisé à l'aide d'une buse, la dimension des gouttelettes expulsées augmente, dû à un manque de pression d'expulsion.

Le brevet américain no. US-A-4 487 334 et la demande de brevet internationale no. PCT/CH83/00122, publiée sous le numéro WO 84/01930, décrivent des régulateurs de poussée qui à l'aide d'un piston, coopérant avec un ressort, modifient la section de passage d'une conduite sous l'influence de la pression avec laquelle le produit est expulsé du container aérosol, de sorte que, lorsque la pression est forte, la section de passage est petite et grandit proportionellement avec la chute de pression d'expulsion.

Ces régulateurs, fabriqués en matière plastique moulée, exigeant cependant, pour un bon fonctionnement, une précision très haute et très coûteuse qui se situe à ± 0,01 mm pour un diamètre de piston inférieur à 1 mm. Or, certains solvants, notamment le chlorure de méthylène, provoque un gonflement de la matière plastique utilisée, ce qui entraîne un blocage du piston dans la conduite d'expulsion et conséquemment une obturation du système.

La présente invention a pour but d'éliminer ces problèmes et de proposer un régulateur de poussée tel que défini dans les revendications 1 et 8 annexées.

Dans ce qui suit des formes d'exécutions préférencielles mais non-limitatives de l'invention sont décrites sur la base du dessin dans lequel est illustré à la

fig. 1 une vue en coupe d'un poussoir comprenant une première forme d'exécution d'un régulateur selon l'invention, à la

fig. 2 une vue en perspective éclatée d'une seconde forme d'exécution d'un régulateur, à la

fig. 3 une vue en perspective d'une première variante d'un disque de régulation compris dans un régulateur, à la

fig. 4 une vue en perspective éclatée d'une troisième forme d'exécution d'un régulateur, à la

fig. 5 une vue en coupe d'une seconde variante d'un disque de régulation compris dans un régulateur, à la

fig. 6 une vue en plan du disque de régulation de la fig. 5, à la

fig. 7 une vue en coupe d'une quatrième forme d'exécution d'un régulateur, avant son utilisation, à la

fig. 8 une vue en coupe du régulateur selon la fig. 7, durant son utilisation, à la fig. 9 des vues en perspective de différentes variantes de disques de régulation, à la

fig. 10 une vue en perspective éclatée d'une cinquième forme d'exécution d'un régulateur, à la

fig. 11 une vue en coupe d'une sixième forme d'exécution d'un régulateur, à la

fig. 12 une vue en plan d'une autre variante du disque de régulation, placé sur un disque d'accélération, à la

fig. 13 une vue en perspective de l'arrangement de la fig. 12, à la

fig. 14 une vue en coupe d'une partie du disque de régulation de la fig. 12, fortement agrandi, au repos, et à la

fig. 15 une vue en coupe de la partie du disque de régulation de la fig. 14, durant l'utilisation.

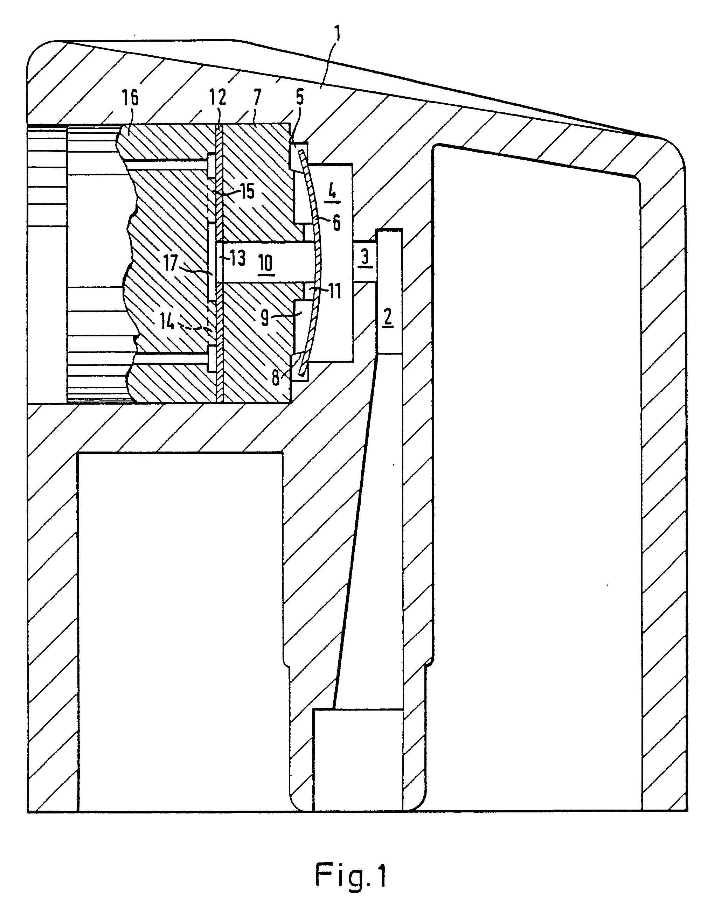

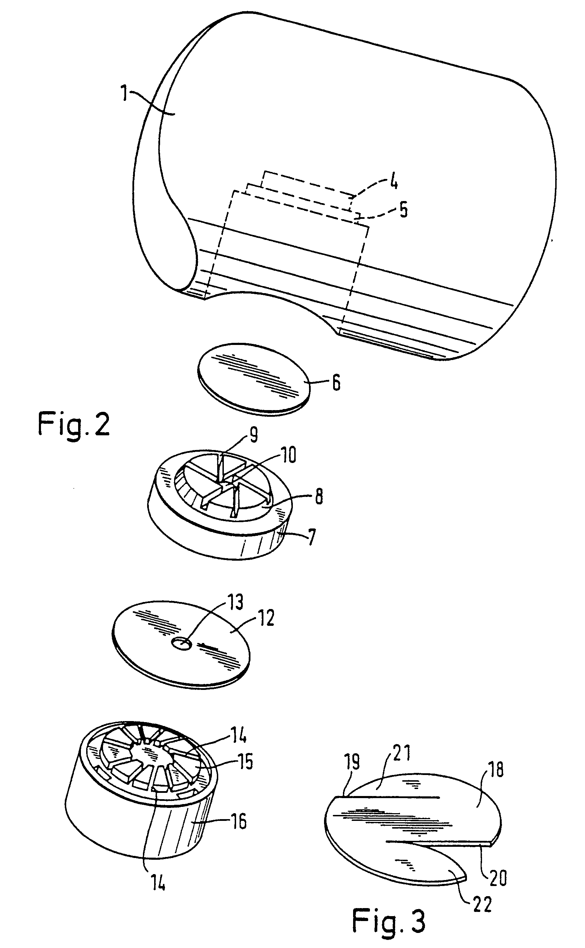

Les figs. 1 et 2 montrent un régulateur logé dans un poussoir 1 d'une valve aérosol non représentée. Une conduite verticale 2, qui est en rapport avec la valve, débouche dans une chambre 4 qui présente un élargissement 5. La chambre 4 est obturée par un disque flexible 6 qui est de préférence en acier inoxydable mais qui peut également être en matière plastique. Le disque flexible 6 est logé dans l'élargissement 5 où il est maintenu en place par un disque rigide 7. Celui-ci présente une saillie convexe 8 qui est munie de multiples rainures 9 qui sont disposées de sorte qu'elles forment une tangente avec la circonférence d'une conduite axiale 10. Les rainures 9 présentent des paliers 11 qui sont destinés à créer des turbulences dans le produit traversant le régulateur sous pression. Le disque 7 s'appuie sur un disque d'étanchéisation 12, de préférence également en acier inoxydable, muni d'un alésage 13. Une buse 16, présentant une saillie 15 et des rainures 14, s'appuie sur le disque d'étanchéisation 12, de sorte que les rainures 14 agissent comme conduites.

La demande PCT précitée décrit l'apparition de turbulences lorsque le flux d'un liquide sous pression est dévié perpendiculairement en présence d'une tige, en l'occurence un piston, dans le canal amont, ces turbulences constituant une force de freinage contre le flux, pouvant aller jusqu'à un verrouillage de l'écoulement. Cette force de freinage est directement proportionnelle à la pression d'expulsion du liquide: plus la pression est forte, plus la force de freinage est élevée.

La même demande de brevet décrit l'asservissement de cette force de freinage pour la régulation de la poussée, sous laquelle un produit est expulsé d'un container aérosol. Toutefois, dans cette application connue les turbulences et leur force de freinage dépendent également de la présence d'un piston logé dans une chambre 17 de la buse 16. En absence de ce piston la force de freinage des turbulences est d'une intensité moindre.

Afin d'éliminer la nécessité d'une pièce en matière plastique moulé de haute précision afin d'obtenir la qualité de régulation requise, la présente invention est dépourvue d'un piston. Pour compenser le manque de force de freinage des turbulences, dû au manque du piston, la saillie convexe 8 est pourvue des rainures 9 qui deviennent, grâce à un appui ferme du disque flexible 6 sur les rainures 9, des conduites. Du fait que ces conduites forment une tangente avec le pourtour de la conduite axiale 10 du disque rigide 7, des turbulences apparaissent, dont la force de freinage s'ajoute à celle, affaiblie par le manque d'un piston, de la buse 16, de sorte que le régulateur décrit dispose d'un «générateur de turbulences» à deux paliers. Etant donné que le disque 6 est flexible, il se laisse déformer par la pression d'expulsion du produit expulsé, de sorte que, vue la convexité de la saillie 8, les conduites 9 présentent des sections de passage minimum sous une forte pression d'expulsion, sections qui s'agrandissent au fur et à mesure de la baisse de la pression d'expulsion, suite à un infime déplacement du disque flexible 6 en direction amont. De ce fait, la régulation du débit se fait aussi bien par les variations de la force de frainage des turbulences, suite aux variations de la pression d'expulsion, que par l'agrandissement des sections de passage des conduites 9, suite à la baisse de pression d'expulsion qui permet au disque flexible 6 de se détendre.

L'apparition des turbulences dépend de la viscosité du produit à expulser pour être pulvérisé à l'aide de la buse 16. On a constaté qu'à partir d'une viscosité de 8 centipoises la force de freinage des turbulences, dans l'exécution décrite du régulateur, diminue de même que la qualité de régulation. Pour compenser cette qualité manquante, le disque flexible 6 peut être remplacé par un disque régulateur 18 ainsi qu'illustré à la fig. 3. Ce disque régulateur 18 présente, dans une première variante d'exécution, des entailles 19 et 20 desquelles résultent des ressorts-lamelles 21 et 22. Lorsque la pression d'expulsion du produit est élevée, les ressorts-lamelles 21 et 22 sont abaissées et obturent au moins deux des conduites 9. Au fur et à mesure que la pression d'expulsion baisse, les ressorts-lamelles 21 et 22 se détendent, de sorte que les conduites 9 obturées sont ouvertes au fur et à mesure. Dans cette exécution du régulateur la qualité de régulation est assurée partiellement par les turbulences, mais en majeure partie par les variations des sections de passage des conduites 9.

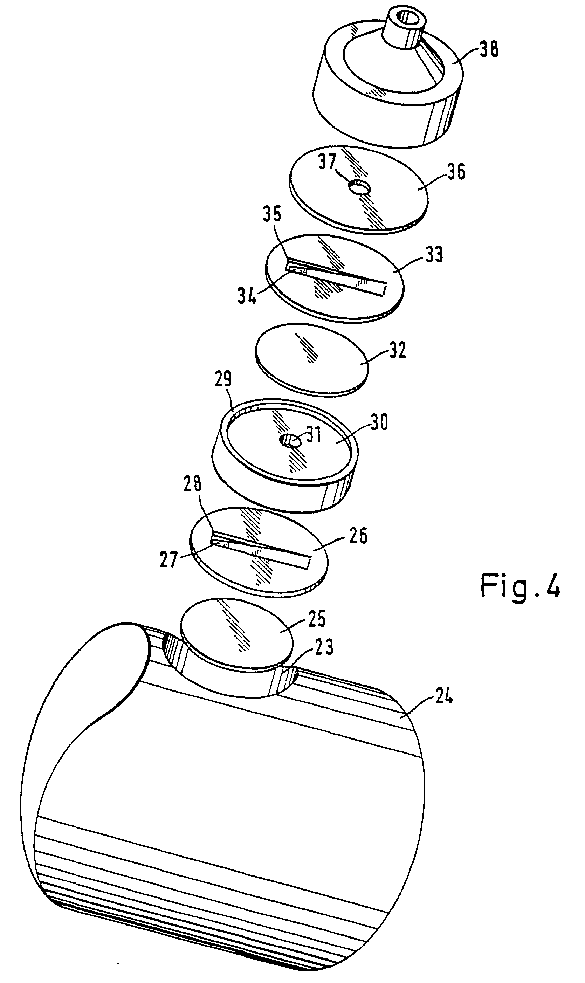

La fig. 4 présente une autre forme d'exécution d'un régulateur qui est destiné à la diffusion de produits visqueux tels que crèmes, huiles, moutardes etc. Etant donné que ce genre de produits, présentant de hautes viscosités, ne génère pas de turbulences, la régulation de leur débit par unité de temps doit se faire exclusivement par des variations des sections de passage sous l'influence de la chute de pression d'expulsion des gaz comprimés utilisés.

Dans un siège cylindrique 23 d'un poussoir 24 se logent en direction aval un disque flexible 25, un premier disque régulateur flexible 26, présentant un ressort-lamelle 27 qui peut fermer temporairement une découpe 28, un disque rigide 29 présentant une chambre 30 et une conduite axiale 31, la saillie 8 n'étant pas visible, un disque flexible 32, un second disque régulateur flexible 33, présentant un ressort-lamelle 34 qui peut fermer temporairement une découpe 35, un disque flexible 36, présentant un alésage 37, l'ensemble étant tenu en place par un diffuseur 38.

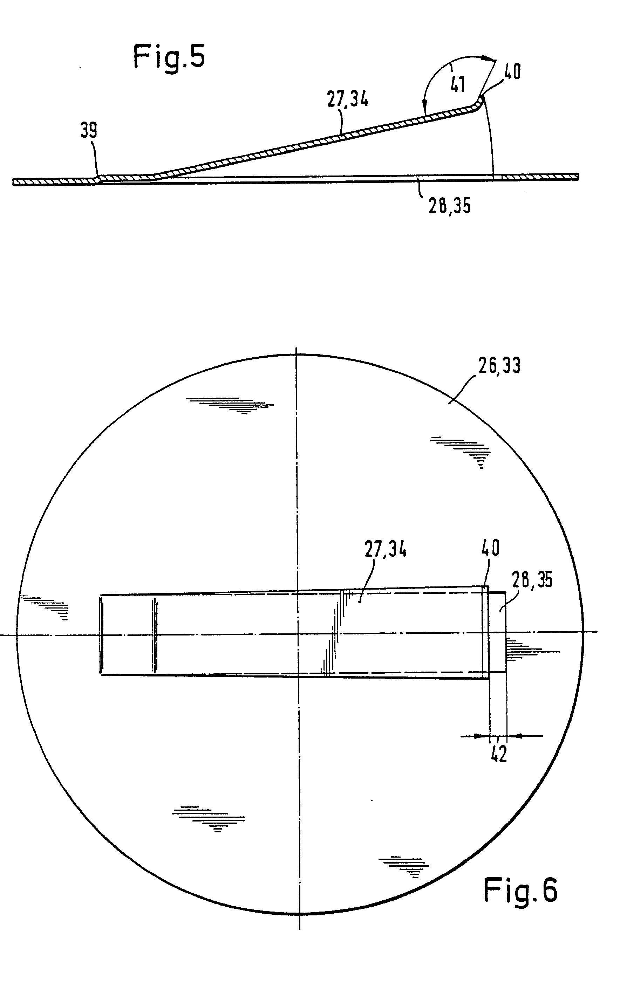

Les détails de construction des deux disques régulateurs flexibles 26 et 33 sont illustrés aux figs. 5 et 6 qui les montrent en coupe et en vue en plan respectivement. Les ressorts-lamelles 27 et 34, étant sensés à obturer temporairement les découpes 28 et 35, doivent être ajustés parfaitement et afin d'éviter qu'ils restent bloqués dans les découpes 28 et 35 sont pourvus à leurs bases d'enflements 39 qui donnent aux ressorts-lamelles 27 et 34 suffisamment de force de ressort pour éviter un blocage dans les découpes 28 et 35. Afin qu'après fermeture des découpes 28 et 35 un minimum de passage persiste, chaque ressort-lamelle 27 et 34 présente à son bout libre un bequet 40 qui, en fonction d'un angle 41, raccourcit la longueur active des ressorts-lamelles 27 et 34.

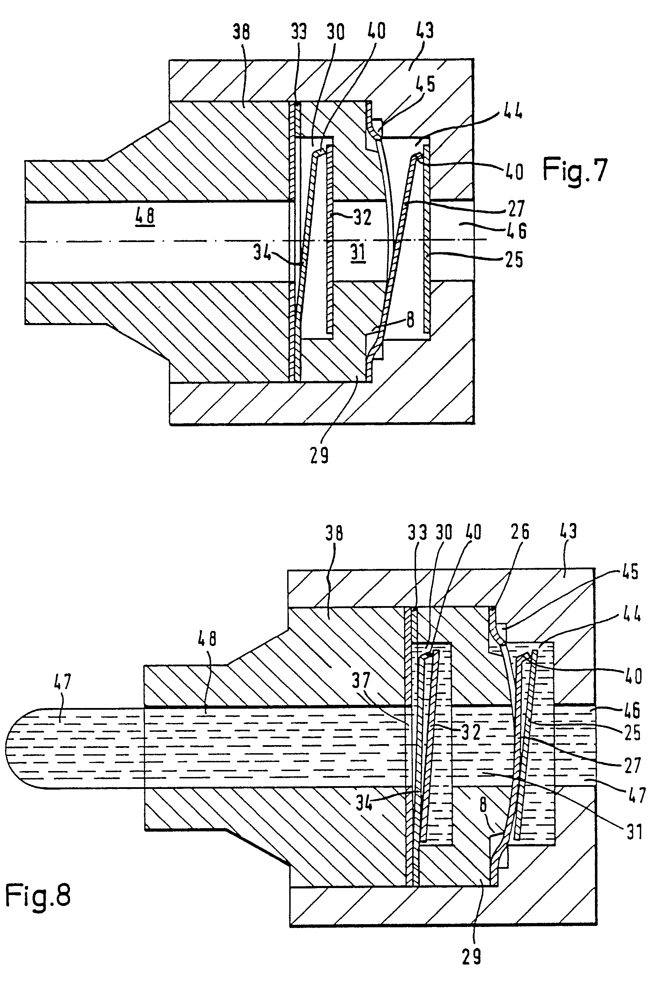

Le fonctionnement de la forme d'exécution du régulateur selon la fig. 4 est illustré par les figs. 7 et 8, où le régulateur est logé dans un cylindre 43 dans lequel sont aménagés une chambre 44, présentant un élargissement 45 et une conduite axiale 46. Lorsque le régulateur est en repos, c'est-à-dire si aucun produit s'écoule par la valve du container aérosol non-représentée, la conduite 46 est obturé par le disque flexible 25, maintenu dans la position illustrée par le ressort-lamelle 27 du premier disque régulateur flexible 26 qui, lui, est maintenu en place par le disque rigide 29, muni de la saillie 8 et de la conduite axiale 31.

Le disque rigide 29 présente la chambre 30, dans laquelle se trouve logé le disque flexible 32, maintenu en place par le ressort-lamelle 34 du second disque régulateur flexible 33 qui s'appuie sur le disque flexible 36. L'ensemble est tenu en place par le diffuseur 38. Lorsqu'on ouvre la valve non-représentée, le produit 47, expulsé par la pression agissant dans le container aérosol, pousse le disque flexible 25 en direction aval ouvrant ainsi la conduite axiale 46 tout en déplaçant le ressort-lamelle 27 en direction aval, fermant partiellement la découpe 28 et ne laissant qu'une section de passage ouverte, qui correspond à la pression d'expulsion. Au moment de la pression d'expulsion maximale, ce passage sera minimal, grâce au bequet 40. Ainsi à tout moment de l'ouverture de la valve le produit 47 peut s'écouler par la conduite axiale 31 et agir sur le disque flexible 32, qui à son tour déplace le ressort-lamelle 34 du second disque régulateur flexible 32 en direction aval en le plaçant sur l'entrée de l'alésage 37, ce qui réduit sa section de passage, en dépendance de la pression d'expulsion, mais laisse à tout moment de l'ouverture de la valve un passage minimum, grâce au bequet 40, par lequel le produit 47 peut s'écouler par le diffuseur 38 à travers une conduite 48. Au fur et à mesure que la pression d'expulsion du produit 47 baisse, les ressorts-lamelles 27 et 34 poussent de plus en plus en direction amont les disques flexibles 25 et 32, ouvrant ainsi de plus en plus les découpes 28 et 35, de sorte que le débit de produit par unité de temps reste, au moins approximativement, constant.

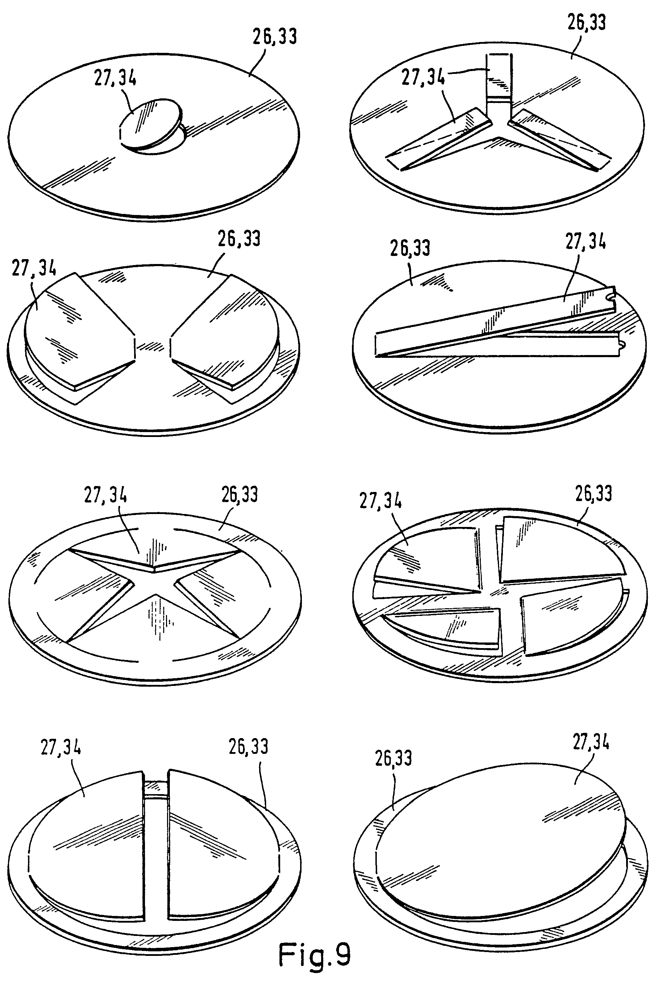

La fig. 9 représente des variantes avantageuses de disques régulateurs flexibles 26 et 33, présentant des ressorts-lamelles 27 et 34 de formes et de nombres différents pour tenir compte d'un débit par unité de temps désiré et de la viscosité du produit 47 à diffuser. La force de ressort des ressort-lamelles 27 et 34 est variable en variant la largeur d'attache des ressorts-lamelles 27 et 34 aux disques régulateurs flexibles 26 et 33.

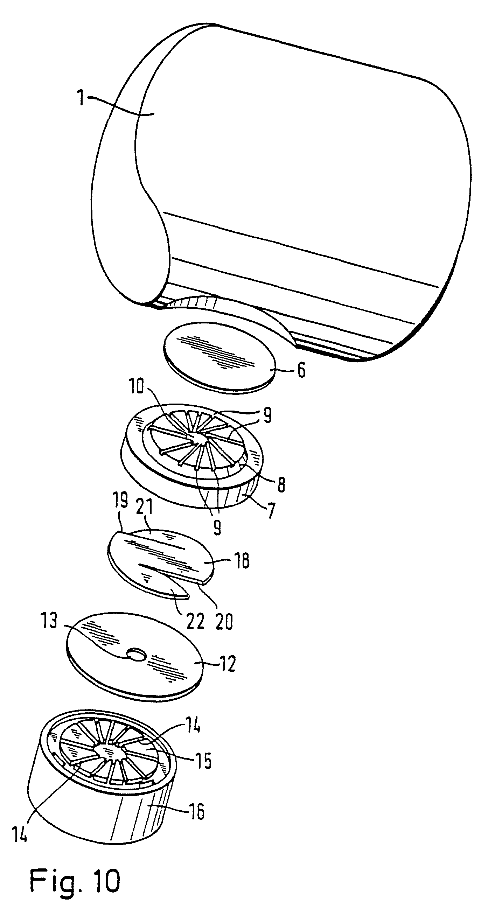

La fig. 10 montre une autre forme d'exécution d'un régulateur tel qu'il est avantageusement utilisé dans le poussoir selon l'invention. Ce régulateur est destiné à afiner la régulation, spécialement pour l'utilisation du régulateur pour pulvériser une laque de cheveux qui doit être applicable sur les cheveux avec un angle de cône de pulvérisation toujours aussi identique que possible. Etant donné que l'apparition de turbulences de freinage dépend de la viscosité du produit et que la laque de cheveux peut être d'une viscosité variable en fonction de la qualité de fixation requise, il est nécessaire d'ajouter à la régulation par turbulences une autre régulation qui en l'occurence travaille par variation de la section de passage en fonction des variations de la pression d'expulsion sous laquelle le produit s'écoule par le régulateur.

Le régulateur selon la fig. 10 ressemble de près à celui des figs. 1 et 2, avec la différence que le disque rigide 7 présente dans la saillie 8 douze au lieu de six rainures 9 et qu'un disque régulateur 18 est logé entre le disque rigide 7 et le disque d'étanchéisation 12, à l'intérieur d'une chambre 30, non-visible, aménagée dans la face aval du disque rigide 7, ainsi qu'illustré à la fig. 4. Lorsque ce régulateur entre en fonction, parce que la valve du container aérosol a été ouverte, le disque flexible 6 est déplacé vers la face amont du disque rigide 7, de sorte que les rainures 9 deviennent des conduites, provoquant des turbulences à l'entrée de la conduite axiale 10. Le produit déplace ensuite le disque régulateur 18 sur la surface amont du disque d'étanchéisation 12, couvrant ainsi l'alésage 13. La force ressort des ressort-lamelles 21 et 22 est choisie de sorte qu'une section de passage minimum entre la face aval du disque régulateur 18 et la face amont du disque d'étanchéisation 12 persiste pour assurer un débit minimum lorsque la pression d'expulsion du produit est forte. Au fur et à mesure que celle-ci baisse, les ressorts-lamelles 21 et 22 se détendent et soulèvent le disque régulateur 18, ce qui augmente graduellement la section de passage en fonction de la chute de pression d'expulsion.

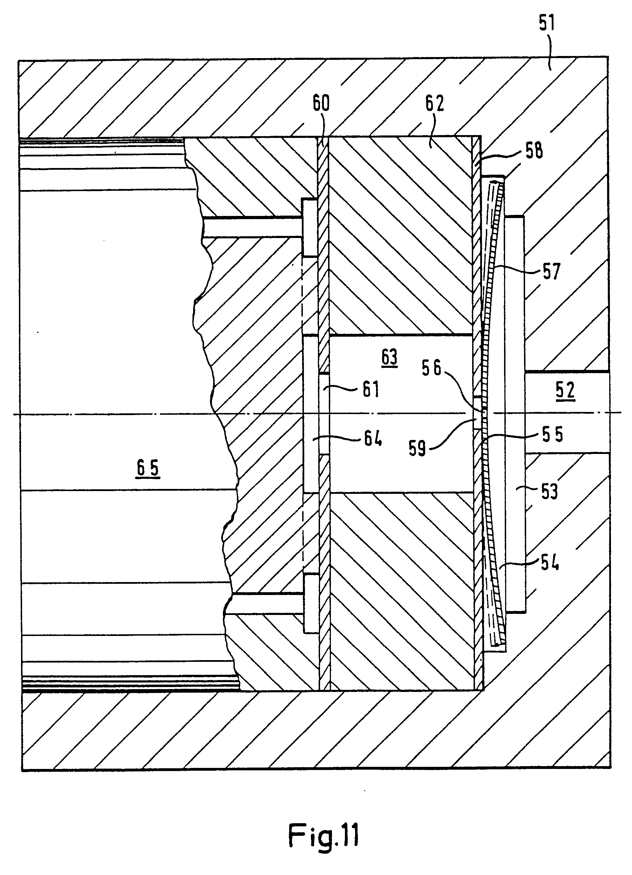

La fig. 11 montre une prochaine forme d'exécution d'un régulateur, logé dans une enceinte cylindrique 51 présentant une conduite d'alimentation 52 qui abouche dans des chambres 53 et 54. Dans la chambre 54 se trouve un disque régulateur 55, de préférence en acier inoxydable, présentant une entaille 56 qui se trouve dans l'axe du disque régulateur 55 et dans le sens de laminage du métal. Une courbure 57 du disque régulateur 55 est de préférence perpendiculaire à l'entaille 56 et de ce fait perpendiculaire au sens de laminage du métal. La force-ressort qui résulte de la courbure 57 est très élevée, donnant peu de possibilités d'adaptation, si la courbure est faite dans le sens du laminage. Par contre, une courbure 57 faite perpendiculairement au sens de laminage, offre une force-ressort plus faible, ayant une plage d'adaptation plus large. La force-ressort peut aussi être réglée à l'aide de l'entaille 56: plus elle est longue, plus elle réduit la force-ressort. D'autre part, la longueur de l'entaille 56 influence le débit de produit par unité de temps, en s'étendant plus ou moins jusqu'à la proximité d'une percée 59 d'un disque d'accélération 58. L'entaille 56 s'impose du fait qu'une pression initiale très élevée, régnant dans le container aérosol, par exemple 10 bar, pourrait presser le disque régulateur 55 si fortement contre le disque d'accélération 58, qu'une obturation de la percée pourrait en résulter. Cette obturation est évitée par l'entaille 56. Entre le disque d'accélération 58 avec sa percée 59 et un disque rigide 60 ayant une percée 61, se trouve un disque 62 présentant une chambre 63. La dimension de la percée 59 provoque une accélération du flux du produit en diminuant sa pression d'expulsion, qui se rétablit dans la chambre 63, pour être de nouveau accélérée par la dimension réduite de la percée 61, pour se rétablir de nouveau dans une chambre 64 d'un gicleur 65. La transformation de la vitesse du flux de produit en pression d'expulsion dans les chambres 63 et 64 est favorable à la qualité de régulation du régulateur. Il est à noter qu'une grande dimension de la percée 61 exige une force-ressort du disque régulateur 55 plus élevée qu'une petite percée 61. On dispose donc de plusieurs paramètres pour obtenir la régulation requise. L'épaisseur du disque régulateur 55 est également un de ces paramètres. Ces différents paramètres permettent l'adaptation du régulateur à la viscosité des divers produits à diffuser, allant de l'eau en passant par l'alcool et l'huile jusqu'à des produits crémeux.

Le disque 62 est de préférence fabriqué en matière plastique moulée, tandis que le disque d'accélération 58 et le disque rigide 60 sont de préférence en acier inoxydable. De ce fait la dimension des percées 59 et 61 ne peut pas être influencée par un solvant d'une formulation agressive, par exemple du chlorure de méthylène. De plus, le disque d'accélération 58 et le disque rigide 60 couvrent les imperfections de surface des faces amont et aval du disque 62, dues au moulage, par exemple, les traces laissées par un extracteur.

Les disques régulateurs 55 et 58 ainsi que le disque rigide 60 et le disque 62, dont les dimensions sont choisies de sorte qu'ils assurent une étanchéité parfaite entre leurs pourtours et l'enceinte cylindrique 51, sont maintenus en place par le gicleur 65, de préférence tel que décrit dans le brevet européen no. 688, qui est fortement ancré dans l'enceinte cylindrique 51. Ce gicleur 65 peut être remplacé par un simple tube, par exemple, pour la diffusion de produits huileux ou crémeux.

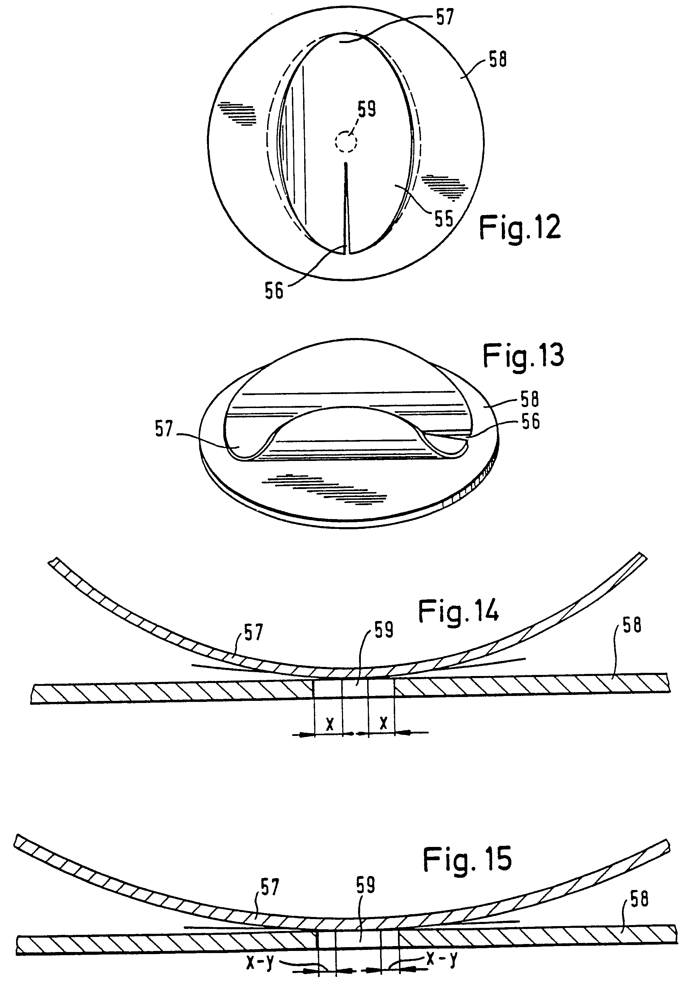

Le fonctionnement du régulateur selon la fig. 11 est partiellement illustré aux figs. 12 à 15 et est comme suit: au repos, lorsque la valve du container aérosol est fermée, le disque 55 s'appuie, par sa force-ressort, sur la percée 59 du disque d'accélération 58, laissant subsister des passages x (fig. 14). Dès que la pression sous laquelle se trouve le produit à diffuser agit sur le disque régulateur 55, la courbure 57 s'aplatit, ce qui réduit la section de passage de la percée 59 pour devenir x-y (fig. 15). Au fur et à mesure que la pression d'expulsion du produit à diffuser baisse, la force-ressort du disque régulateur 55 rétablit la forme de la courbure 57 proportionellement à la chute de pression d'expulsion dans le produit ouvrant progressivement la section de passage de la percée 59 pour atteindre finalement celle qui assure la section de passage x, notamment lorsque le container aérosol n'est plus que faiblement rempli. La pression qui règne dans la chambre 63 agit comme frein contre l'afflux du produit à travers de la percée 59, force de frein qui faiblit progressivement avec la chute de pression d'expulsion et qui fait donc partie des moyens de régulation du régulateur décrit.

## Revendications

1. Régulateur de poussée comprenant une enceinte (1, 24, 43) de montage, présentant une conduite d'alimentation (6, 46), à l'intérieur de laquelle enceinte est au moins logé un diffuseur (16, 38) et un ensemble de réglage (6, 7), caractérisé en ce que la conduite d'alimentation (3, 46) est reliée avec au moins une chambre (4, 44) du côté aval de laquelle est disposé un premier disque flexible (6, 18, 25) lequel s'appuie sur la face amont d'un disque rigide (7, 29) présentant une conduite axiale (10, 31) et une saillie (8) convexe avec au moins deux rainures (9) qui forment une tangente avec le pourtour de la conduite axiale (10) et s'appuyant de son côté aval sur un second disque (12, 32) qui lui est, de son côté aval, en contact avec le diffuseur (16, 38).

2. Régulateur selon la revendication 1, caractérisé en ce que les premier et second disques (25, 32) s'appuient sur le disque rigide (29) et le diffuseur (38) par l'intermédiaire d'un disque flexible (26, 33) présentant un ressort-lamelle (27, 34).

3. Régulateur selon la revendication 1 ou 2, caractérisé en ce que les disques flexibles (6, 25, 26, 32, 33) sont en acier inoxydable ou en matière plastique.

4. Régulateur selon la revendication 1, caractérisé en ce que le disque flexible (18) est muni d'entailles (19, 20) et de ressorts-lamelles (21, 22).

5. Régulateur selon la revendication 2, caractérisé en ce que les lamelles (27, 34) sont munies à leurs extrémités libres d'un bequet (40).

6. Régulateur selon la revendication 2, caractérisé en ce que les lamelles (27, 34) présentent à leurs bases un enflement (39).

7. Régulateur selon la revendication 1, caractérisé en ce que le disque rigide (7) présente sur sa face aval une chambre (30) dans laquelle est logé un disque régulateur (18) présentant des ressorts-lamelles (21, 22) s'appuyant sur la face amont d'un disque d'étanchéisation (12).

8. Régulateur de poussée comprenant une enceinte (51) de montage, présentant une conduite d'alimentation (52), à l'intérieur de laquelle enceinte est au moins logé un diffuseur (65) et un ensemble de réglage (55, 58), caractérisé en ce que la conduite d'alimentation (52) est reliée avec au moins une chambre (53) du côté aval de laquelle est prévue une seconde chambre (54) dans laquelle est disposé un disque flexible (55) régulateur présentant une courbure (57) et s'appuyant avec son côté convexe sur un disque d'accélération (58) présentant une percée centrale (59) abouchant dans une chambre (63) d'un disque suivant (62), entre lequel et le diffuseur (65) est logé un disque rigide (60) présentant une percée (61) et que le disque régulateur (55) est en acier inoxydable et est muni d'une entaille (56) s'étendant plus ou moins jusqu'à la proximité de la percée (59).

9. Régulateur selon la revendication 8, caractérisé en ce que la courbure (57) du disque régulateur (55) est faite perpendiculairement au sens de laminage du métal, tandis que l'entaille (56) est dans le sens de laminage du métal.

## Patentansprüche

1. Schubregler enthaltend ein Montagegehäuse (1, 24, 43), das eine Speiseleitung (3, 46) aufweist, innerhalb welchem Gehäuse ein Diffusor (16, 38) und eine Regeleinheit (6, 7) gelagert sind, dadurch gekennzeichnet, daß die Speiseleitung (3, 46) mit zumindest einer Kammer (4, 44) verbunden ist, auf deren stromabwärtsliegenden Seite eine erste flexible Scheibe (6, 18, 25) angeordnet ist, welche sich gegen die stromaufwärtsliegende Seite einer starren Scheibe (7, 29) abstützt, welche eine axiale Leitung (10, 31) und eine konvexe Vorkragung (8) mit zumindest zwei Rillen (9), die tangential am Umfang der axialen Leitung (10) anliegen, aufweist, und die sich mit ihrer stromabwärtsliegenden Seite gegen eine zweite Scheibe (12, 32) abstützt, die, auf ihrer stromabwärtsliegenden Seite mit dem Diffusor (16, 38) in Berührung steht.

2. Schubregler nach Anspruch 1, dadurch gekennzeichnet, daß sich die ersten und zweiten Scheiben (25, 32) über je eine flexible Scheibe (26, 33) mit Federlamelle (27, 34) gegen die starre Scheibe (29) respektive den Diffusor (38) abstützen.

3. Schubregler nach Anspruch 1 oder 2, dadurch gekennzeichnet, daß die flexiblen Scheiben (6, 25, 26, 32, 33) aus rostfreiem Stahl oder aus Kunststoff bestehen.

4. Schubregler nach Anspruch 1, dadurch gekennzeichnet, daß die flexible Scheibe (18) mit Kerben (19, 20) und Federlamellen (21, 22) versehen ist.

5. Schubregler nach Anspruch 2, dadurch gekennzeichnet, daß die Lamellen (27, 34) an ihren freien Enden mit einer Nase (40) versehen sind.

6. Schubregler nach Anspruch 2, dadurch gekennzeichnet, daß die Lamellen (27, 34) an ihren Basen eine Aufwerfung (39) aufweisen.

7. Schubregler nach Anspruch 1, dadurch gekennzeichnet, daß die starre Scheibe (7) auf ihrer stromabwärts gerichteten Seite eine Kammer (30) aufweist, in welcher eine Regelscheibe (18) gelagert ist, die Federlamellen (21, 22) aufweist, die sich gegen die stromaufwärts liegende Seite einer Dichtungsscheibe (12) abstützen.

8. Schubregler enthaltend ein Montagegehäuse (51), das eine Speiseleitung (52) aufweist, innerhalb welchem Gehäuse ein Diffusor (65) und eine Regeleinheit (55, 58) gelagert sind, dadurch gekennzeichnet, daß die Speiseleitung (52) mit zumindest einer Kammer (53) verbunden ist, auf deren stromabwärtsliegenden Seite eine zweite Kammer (54) vorgesehen ist, in welcher eine flexible Regelscheibe (55) angeordnet ist, die eine Biegung (57) aufweist und sich mit ihrer konvexen Seite gegen eine Beschleunigerscheibe (58) abstützt, die eine zentrale Bohrung (59) aufweist, die in eine Kammer (63) einer folgenden Scheibe (62) mündet, zwischen welcher und dem Diffusor (65) eine starre Scheibe (60) angeordnet ist, die eine Bohrung (61) aufweist, und daß die Regelscheibe (55) aus rostfreiem Stahl besteht und mit einer Kerbe (56) versehen ist, die bis in die Nähe der Bohrung (59) reicht.

9. Schubregler nach Anspruch 8, dadurch gekennzeichnet, daß die Biegung (57) der Regelscheibe (55) quer zur Walzrichtung des Metalls verläuft, wogegen die Kerbe (56) in Walzrichtung des Metalls verläuft.

## Claims

1. Thrust regulator comprising a mounting enclosure (1, 24, 43) which exhibits a supply duct (3, 46), inside which enclosure there is housed at least one dispensing device (16, 38) and one regulating assembly (6, 7), characterized in that the supply duct (3, 46) is connected to at least one chamber (4, 44), on the downstream side of which a first flexible disk (6, 18, 25) is arranged, which bears against the upstream face of a rigid disk (7, 29) which exhibits an axial duct (10, 31) and a convex protrusion (8) with at least two grooves (9) which form tangents to the periphery of the axial duct (10) and, on its downstream side, bears against a second disk (12, 32), which is itself in contact, on its downstream side, with the dispensing device (16, 38).

2. The thrust regulator as claimed in claim 1, characterized in that the first and the second disks (25, 32) bear against the rigid disk (29) and the dispensing device (38) respectively via a flexible disk (26, 33) presenting a leaf spring (27, 34).

3. The thrust regulator as claimed in claim 1 or 2, characterized in that the flexible disks (6, 25, 26, 32, 33) are made of stainless steel or plastic.

4. The thrust regulator as claimed in claim 1, characterized in that the flexible disk (18) is provided with notches (19, 20) and leaf springs (21, 22).

5. The thrust regulator as claimed in claim 2, characterized in that each of the leaf springs (27, 34) is provided, at its free end, with a small beak (40).

6. The thrust regulator as claimed in claim 2, characterized in that each of the leaf springs (27, 34) presents a raised portion (39) at its base.

7. The thrust regulator as claimed in claim 1, characterized in that the rigid disk (7) exhibits a chamber (30) on its downstream face, inside which chamber (30) a regulating disk (18) is housed, presenting leaf springs (21, 22) which bear against the upstream face of a sealing disk (12).

8. A thrust regulator comprising a mounting enclosure (51) which exhibits a supply duct (52), inside which enclosure there is housed at least one dispensing device (65) and one regulating assembly (55, 58), characterized in that the supply duct (52) is connected to at least one chamber (53) on the downstream face of which is provided a second chamber (54) inside which a flexible regulating disk (55) is housed, exhibiting a curvature (57) and bearing, with its convex side, against an accelerating disk (58) which exhibits a central through-hole (59) opening into a chamber (63) in a disk (62) which follows, between which and the dispensing device (65) a rigid disk (60) is housed, exhibiting a through-hole (61), and in that the regulating disk (55) is made of stainless steel and is provided with a notch (56) extending as far as the proximity of the through-hole (59).

9. The thrust regulator as claimed in claim 8, characterized in that the curvature (57) of the regulating disk (55) is made perpendicularly to the direction in which the metal was rolled, while the notch (56) is in the direction of rolling.

Fig.1

Fig.2

Fig.3

Fig.4

# Fig.5

# Fig.6

Fig.7

Fig.8

Fig.9

Fig. 10

Fig.11

Fig.12

Fig.13

Fig.14

Fig.15